# EUROPEAN PATENT SPECIFICATION

(11) **EP 1 930 972 B1**
(45) Date of publication and mention of the grant of the patent: **13.07.2011**
(21) Application number: 06782216.3
(22) Date of filing: 27.07.2006
(51) Int. Cl.: H01M 8/02

(54) **SEPARATOR MATERIAL FOR FUEL BATTERY AND PROCESS FOR PRODUCING THE SAME**
TRENNMATERIAL FÜR EINE BRENNSTOFFBATTERIE UND PROZESS ZU SEINER HERSTELLUNG
MATÉRIAU DE SÉPARATION POUR PILE A COMBUSTIBLE ET PROCESSUS DE FABRICATION IDOINE

(30) Priority: 26.09.2005 JP 2005277613
(43) Date of publication of application: 11.06.2008
(73) Proprietor: Tokai Carbon Company, Ltd., Minato-ku, Tokyo 107-8636 (JP)
(72) Inventor: TAHARA, Tomonori, Tokyo 107-8636 (JP); MAKITA, Taiyo, Tokyo 107-8636 (JP); IIDA, Takuji, Tokyo 107-8636 (JP)
(74) Representative: Müller-Wolff, Thomas
(86) International application number: PCT/JP2006/315348
(87) International publication number: WO 2007/034628

(56) References cited:
- WO-A1-03/056648
- JP-A- 2002 289 214
- JP-A- 2003 086 198
- JP-A- 2005 071 887

## Description

### TECHNICAL FIELD

The present invention relates to a separator material for fuel cells used for automobiles, small distributed power supplies, and the like, and a process of producing the same.

### BACKGROUND ART

A fuel cell directly converts the chemical energy of fuel into electrical energy at a high conversion efficiency. Therefore, fuel cells are expected to be automotive power supplies, small distributed power supplies, and the like.

A fuel cell includes a stack formed by stacking single cells, current collectors provided outside the stack, and the like. Each single cell includes an electrolyte membrane, catalytic electrodes supporting a catalyst such as platinum and provided on either side of the electrolyte membrane, separators having grooves serving as gas passages for supplying a fuel gas (e.g., hydrogen) or an oxidant gas (e.g., oxygen or air) to the electrodes, and the like.

The separator is required to exhibit high gas impermeability in order to completely separately supply the fuel gas and the oxidant gas to the electrodes. The separator is also required to exhibit high conductivity in order to reduce the internal resistance of the cell to increase power generation efficiency. Since the stack is strongly fastened during assembly so that the single cells adhere closely, a high strength is desired for the separator material. When a fuel cell is provided in an automobile, cracking or breakage may occur due to vibrations, impact, expansion/contraction caused by a change in temperature, or the like. Therefore, the separator material is required to exhibit properties which prevent such cracking or breakage.

A carbon material has been used as the separator material for which the above properties are required. A carbon and cured resin molded product (hereinafter, called "carbon/cured resin molded product") produced by binding a carbon powder (e.g., graphite) using a thermosetting resin as a binder and molding the resulting product has been suitably used as the separator material.

On the other hand, since it is necessary to increase the mixing ratio of the carbon powder (conductive filler) in order to ensure high conductivity, the toughness of the carbon/cured resin molded product decreases. Moreover, since the thermosetting resin is hard, the separator tends to break when stacking and fastening the single cells during cell stack assembly.

In order to deal with the above problems, the applicant of the present invention has proposed a fuel cell separator material formed of a rubber composition containing 100 to 150 parts by weight of graphite powder and 80 to 150 parts by weight of carbon black based on 100 parts by weight of a rubber component (JP-A-2001-216977). This fuel cell separator material aims at preventing breakage or deformation of a separator during single cell assembly utilizing the elasticity of the rubber composition.

JP-A-2003-217605 discloses a fuel cell separator molding material containing a thermosetting resin, a conductive carbon base material, and a diene rubber as essential components, wherein the diene rubber has a functional group reactive with the thermosetting resin. However, it is difficult to uniformly mix the diene rubber and the thermosetting resin due to a large difference between the viscosity of the diene rubber and the melt viscosity of the thermosetting resin. Therefore, the diene rubber is dispersed in the thermosetting resin in the shape of islands. This makes it impossible to obtain a sufficient fracture strain.

JP-A-2005-082745 discloses a fuel cell separator formed by molding a conductive resin composition which contains a conductive filler, a resin which is obtained by reacting an epoxy resin and an acrylic anhydride and has an ethylenically unsaturated double bond in the molecule, a monomer which has an ethylenically unsaturated double bond in the molecule, and a thickener. However, this fuel cell separator cannot endure long-term use since hydrolysis occurs due to the ester structure contained in the resin composition.

JP-A-2005-100814 discloses a fuel cell separator obtained by molding a conductive composition in which an elastomer and/or a gum polymer are dispersed in a matrix resin containing a conductive powder, wherein the elastomer and the gum polymer have a number average particle diameter of 0.05 to 5 µm. However, it is difficult to uniformly disperse the elastomer and the gum polymer in the matrix resin.

### DISCLOSURE OF THE INVENTION

The inventors of the present invention conducted studies in order to improve the properties of a separator material formed of a carbon/cured resin molded product. As a result, the inventors found that a separator material having a flexural strength of 30 MPa or more and a fracture strain of 1% or more is suitable for preventing breakage of a separator during cell stack assembly or a long-term cell operation.

The inventors conducted extensive studies on an epoxy resin as a thermosetting resin, and found that the moldability and the properties of a carbon/cured resin molded product can be improved using a mixed resin of a bifunctional aliphatic alcohol ether-type epoxy resin and a polyfunctional phenol-type epoxy resin as a resin component in combination with a phenol resin curing agent.

The present invention has been conceived based on this finding. An object of the present invention is to provide a fuel cell separator material which exhibits a high fracture strain and a high strength, prevents breakage during cell stack assembly or cracking during a cell operation, exhibits excellent conductivity and gas impermeability, and shows excellent properties, and a method of producing the same.

In order to achieve the above object, a fuel cell separator material according to the present invention comprises a carbon/cured resin molded product in which a carbon powder is bound with a binder which comprises a mixed resin of a bifunctional aliphatic alcohol ether-type epoxy resin and a polyfunctional phenol-type epoxy resin, a phenol resin curing agent, and a curing accelerator as essential components.

It is preferable that the mixed resin contain the bifunctional aliphatic alcohol ether-type epoxy resin in an amount of 40 wt% or more.

A method of producing a fuel cell separator material according to the present invention comprises preparing a resin solution by dissolving a bifunctional aliphatic alcohol ether-type epoxy resin, a polyfunctional phenol-type epoxy resin, a phenol resin curing agent, and a curing accelerator in an organic solvent, mixing a carbon powder with the resin solution, removing the organic solvent by volatilization, grinding the mixture to obtain a molding powder, filling a preforming mold with the molding powder, providing an upper mold, preforming the molding powder at a pressure of 1 to 10 MPa to obtain a preform, inserting the preform into a mold, and thermocompression-molding the preform at a pressure of 20 to 50 MPa and a temperature of 150 to 250°C.

### BEST MODE FOR CARRYING OUT THE INVENTION

The fuel cell separator material according to the present invention is mainly characterized in that a binder resin which binds and integrates a carbon powder is a mixed resin of a bifunctional aliphatic alcohol ether-type epoxy resin and a polyfunctional phenol-type epoxy resin.

The bifunctional aliphatic alcohol ether-type epoxy resin is shown by the following general formula (A). In the general formula (A), O represents oxygen, R represents an alkylene group having 2 to 10 carbon atoms, n represents an integer equal to or larger than one, and G represents a glycidyl group. The bifunctional aliphatic alcohol ether-type epoxy resin is preferably an epoxy resin in which the number of carbon atoms between the glycidyl groups is six or more.

G-O-(R-O)n-G (A)

As is clear from the general formula (A), since the bifunctional aliphatic alcohol ether-type epoxy resin has a linear structure, the bifunctional aliphatic alcohol ether-type epoxy resin is flexible due to high molecular mobility to readily exhibit rubber elasticity. Therefore, the bifunctional aliphatic alcohol ether-type epoxy resin exhibits a high degree of flexibility, elongation, fracture strain, and the like.

Typical examples of the bifunctional aliphatic alcohol ether-type epoxy resin shown by the general formula (A) include a hexanediol-type epoxy resin, a polyethylene glycol-type epoxy resin, a polypropylene glycol-type epoxy resin, a polyoxytetramethylene glycol-type epoxy resin, and the like. Of these, a resin in which the number of oxygen atoms is relatively small is preferable. Specifically, water resistance increases as the number of oxygen atoms decreases so that the degree of swelling due to water absorption decreases.

If the number of carbon atoms between the glycidyl groups in the general formula (A) increases, the resin exhibits an increased fracture strain due to an increase in flexibility. On the other hand, the resin exhibits a decreased strength. If the number of carbon atoms between the glycidyl groups is less than six (e.g., four), such an alcohol ether-type epoxy resin exhibits low flexibility since the distance between the glycidyl groups is too short. Therefore, an epoxy resin in which the number of carbon atoms between the glycidyl groups is six or more is preferable in order to ensure flexibility. If the number of carbon atoms between the glycidyl groups is eight or more, strength decreases to a large extent so that flexural strength becomes less than 30 MPa.

Regarding the polyfunctional phenol-type epoxy resin, when using a bifunctional phenol-type epoxy resin which has two epoxy groups in the molecule and has benzene rings (e.g., bisphenol A-type epoxy resin), as shown by the following general formula (B), the resulting cured product has a modulus of elasticity reduced to some extent. On the other hand, such a bifunctional phenol-type epoxy resin shows a decreased molecular mobility due to the planar benzene rings, whereby flexibility and elongation decrease.

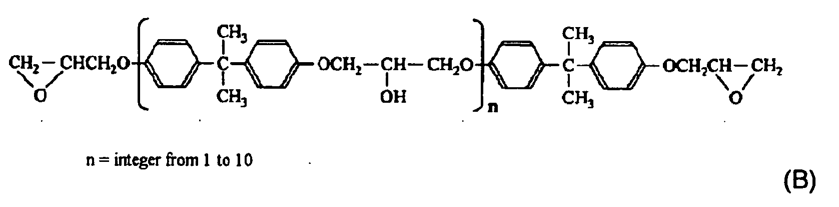

A trifunctional phenol-type epoxy resin has three epoxy groups in the molecule and has benzene rings in its skeleton, as shown by the following general formula (C) (when n=1 in the general formula (B)). When such a trifunctional phenol-type epoxy resin is cured, the resulting cured product has a three-dimensional structure and becomes hard and fragile. A carbon/cured resin molded product obtained by binding a carbon powder with such a binder exhibits high strength, but exhibits decreased flexibility and elongation. Therefore, the fracture strain of the carbon/cured resin molded product decreases to a large extent.

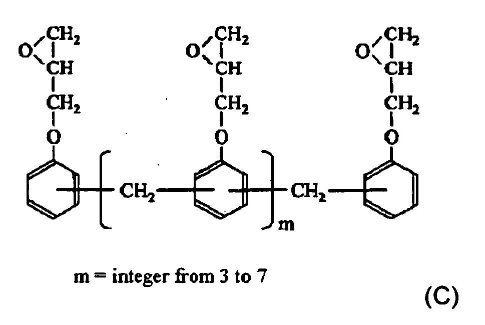

Therefore, flexibility and strength are achieved in combination using the bifunctional aliphatic alcohol ether-type epoxy resin which exhibits excellent flexibility but has low strength and the polyfunctional phenol-type epoxy resin which exhibits high strength but shows low flexibility as the binder resin for the carbon powder.

Specifically, strength and fracture strain can be well-balanced using a mixed resin of the bifunctional aliphatic alcohol ether-type epoxy resin and the polyfunctional phenol-type epoxy resin as the binder resin for the carbon powder while adjusting the mixing ratio of the bifunctional aliphatic alcohol ether-type epoxy resin and the polyfunctional phenol-type epoxy resin. As a result, a separator material can be provided which exhibits a flexural strength of 30 MPa or more and a fracture strain of 1% or more, and can prevent breakage of a separator during cell stack assembly or a long-term cell operation.

When using a bifunctional aliphatic alcohol ether-type epoxy resin in which the number of carbon atoms between the glycidyl groups is large, since such a bifunctional aliphatic alcohol ether-type epoxy resin exhibits excellent flexibility, the content of the bifunctional aliphatic alcohol ether-type epoxy resin in the mixed resin may be reduced. Note that it is preferable to adjust the content of the bifunctional aliphatic alcohol ether-type epoxy resin in the mixed resin to 40 wt% or more in order to ensure flexibility and strength in combination. If the content of the bifunctional aliphatic alcohol ether-type epoxy resin in the mixed resin is less than 40 wt%, the carbon/cured resin molded product tends to break sue to low fracture strain.

The polyfunctional phenol-type epoxy resin is not particularly limited insofar as the polyfunctional phenol-type epoxy resin is a compound which has a phenol structure in the molecule and has two or more epoxy groups. For example, a bisphenol-type epoxy resin, a novolac-type epoxy resin, an orthocresol novolac-type epoxy resin, a biphenyl-type epoxy resin, a naphthalene-skeleton-containing epoxy resin, or the like may be applied.

The phenol resin serves as a curing agent for the mixed resin of the bifunctional aliphatic alcohol ether-type epoxy resin and the polyfunctional phenol-type epoxy resin. The phenol resin is not particularly limited. A novolac resin such as a phenol novolac resin, a cresol novolac resin, a xylene phenol resin, a dicyclopentadiene phenol resin, or a bisphenol-type novolac resin, a bisphenol such as bisphenol A, bisphenol F, bisphenol S, or tetrabromobisphenol A, a bisphenol resin obtained by increasing the molecular weight of the above-mentioned bisphenol with a diglycidyl ether of the bisphenol, or a bisphenol resin obtained by reacting epichlorohydrin and the above-mentioned bisphenol in such a ratio that the bisphenol is in excess with respect to the epichlorohydrin may be used.

The mixing ratio of the phenol resin curing agent is preferably set so that the equivalent ratio of all epoxy groups of the mixed resin and phenolic hydroxyl groups of the phenol resin is 0.7 to 1.5. If the equivalent ratio is less than 0.7 or more than 1.5, the amount of phenol resin or epoxy resin which remains unreacted increases.

Examples of the curing accelerator include a phosphorus compound, a tertiary amine, imidazole, an organic acid metal salt, a Lewis acid, an amine complex salt, and the like. These compounds may be used either individually or in combination of two or more. The curing accelerator is normally used in an amount of 0.05 to 3 parts by weight based on 100 parts by weight of the epoxy resin.

The fuel cell separator material according to the present invention is formed of the carbon/cured resin molded product in which the carbon powder is bound with the binder which contains the mixed resin of the bifunctional aliphatic alcohol ether-type epoxy resin and the polyfunctional phenol-type epoxy resin, the phenol resin curing agent, and the curing accelerator as essential components. As the carbon powder, a graphite powder is preferably used. As the graphite powder, artificial graphite, natural graphite, expanded graphite, a mixture thereof, or the like is used. It is preferable to use a graphite powder of which the grain size is adjusted by grinding graphite using an appropriate grinder and sieving out the graphite particles. In order to prevent removal of the graphite powder particles or occurrence of inter-particle cracks when forming gas grooves in the separator, it is preferable to adjust the grain size of the graphite powder to an average particle diameter of 50 µm or less and a maximum particle diameter of 100 µm or less, for example.

It is preferable that the weight ratio of the mixed resin (solid content) and the carbon powder in the carbon/cured resin molded product be 10:90 to 35:65. If the solid content of the mixed resin is less than 10 wt% and the content of the carbon powder exceeds 90 wt%, flowability during molding decreases due to the low resin content, whereby a mixture with a uniform texture may not be obtained. If the solid content of the mixed resin exceeds 35 wt% and the content of the carbon powder is less than 65 wt%, the cell performance deteriorates due to an increase in the electric resistance of the carbon/cured resin molded product, although moldability increases.

The fuel cell separator material according to the present invention is produced by preparing a resin solution by dissolving the bifunctional aliphatic alcohol ether-type epoxy resin, the polyfunctional phenol-type epoxy resin, the phenol resin curing agent, and the curing accelerator in an organic solvent, mixing the carbon powder with the resin solution, removing the organic solvent by volatilization, grinding the mixture to obtain a molding powder, filling a preforming mold with the molding powder, providing an upper mold, preforming the molding powder at a pressure of 1 to 10 MPa to obtain a preform, inserting the preform into a mold, and thermocompression-molding the preform at a pressure of 20 to 50 MPa and a temperature of 150 to 250°C.

The resin solution is prepared by dissolving the bifunctional aliphatic alcohol ether-type epoxy resin, the polyfunctional phenol-type epoxy resin, the phenol resin curing agent, and the curing accelerator in an appropriate organic solvent such as an alcohol, an ether, or a ketone in a specific weight ratio. The resin solution and the carbon powder are mixed in a desired weight ratio (the mixing ratio (weight ratio) of the mixed resin (solid content) and the carbon powder is preferably 10:90 to 35:65), for example. The components are sufficiently mixed using an appropriate mixer such as a kneader, a pressurized kneader, or a twin-screw mixer to prepare a uniform mixture. After mixing, the organic solvent is removed from the mixture by volatilization by means of vacuum drying or air drying.

The mixture is then ground to obtain a molding powder. The molding powder is preferably ground to a particle diameter of about 0.1 to 1 mm so that the preforming mold is uniformly filled with the molding powder. A cavity of the preforming mold is then uniformly filled with the molding powder. After providing the upper mold heated at a temperature equal to or higher than the melting point of the resin (e.g., melting point of the resin plus about 10°C), the molding powder is preformed at a pressure of 1 to 10 MPa to obtain a sheet-shaped preform.

Since the surface of the carbon powder is covered with the resin coating, the carbon powder exhibits low conductivity. However, since the surface of the carbon powder is exposed when grinding the mixture to prepare the molding powder, the carbon powder recovers conductivity. Moreover, the anisotropy of the properties of the material can be corrected by grinding the mixture.

After applying a release agent to the mold provided with depressions/protrusions for forming grooves serving as gas passages, the sheet-shaped preform is inserted into the mold and is thermocompression-molded at a pressure of 20 to 50 MPa and a temperature of 150 to 250°C to cure the resin to obtain a separator material formed of a carbon/cured resin molded product in which the graphite powder is integrally bound with the cured resin. The separator material thus produced is optionally machined.

### EXAMPLES

The present invention is described below by way of examples and comparative examples.

### Examples 1, 2 and 4 and Comparative Examples 1 to 4

A bifunctional aliphatic alcohol ether-type epoxy resin (epoxy resin A) and a polyfunctional phenol-type epoxy resin (epoxy resin B) were mixed in a ratio shown in Table 1. A novolac phenol resin (curing agent) was added to the mixed resin so that the equivalent ratio of all epoxy groups of the mixed resin and phenolic hydroxyl groups of the phenol resin was 1.0. After the addition of 2-ethyl-4-methylimidazole (curing accelerator) to the mixture in an amount of 1 part by weight based on 100 parts by weight of the mixed resin, the mixture was dissolved in methyl ethyl ketone to prepare a resin solution.

**TABLE 1**

| | Mixed resin (wt%) | | | | | |
|---|---|---|---|---|---|---|
| | Epoxy resin A | | | | Epoxy resin B | |
| | A1*¹ | A2*² | A3*³ | A4*⁴ | B1*⁵ | B2*⁶ |
| Example 1 | 62 | - | - | - | - | 38 |
| Example 2 | 46 | - | - | - | - | 54 |
| Example 4 | - | - | 70 | - | - | 30 |
| Comparative Example 1 | 37 | - | - | - | - | 63 |
| Comparative Example 2 | - | - | - | 100 | - | - |
| Comparative Example 3 | - | - | - | - | 62 | 38 |
| Comparative Example 4 | - | - | - | - | - | 100 |
| (Note) | | | | | | |
| *1 Polyoxytetramethylene glycol-type epoxy resin | | | | | | |
| *2 Hexanediol-type epoxy resin | | | | | | |
| *3 Propylene glycol-type epoxy resin | | | | | | |
| *4 1,4-Butanediol-type epoxy resin | | | | | | |
| *5 Bisphenol A-type epoxy resin | | | | | | |
| *6 Novolac-type epoxy resin | | | | | | |

As a graphite powder, an artificial graphite powder of which the grain size was adjusted to an average particle diameter of 40 µm and a maximum particle diameter of 100 µm or less was used. The mixed resin solution and the graphite powder were mixed so that the weight ratio of the mixed resin solution (solid content) and the graphite powder was 20:80. The components were mixed in a kneader for one hour. The mixture was air-dried at room temperature for 24 hours, and then vacuum-dried to remove methyl ethyl ketone by volatilization. After grinding the resulting product, the grain size was adjusted to obtain a molding powder with a particle diameter of 0.1 to 0.5 mm.

A preforming mold was uniformly filled with the resulting molding powder. After providing an upper mold which was heated at 70°C, the molding powder was preformed at a pressure of 3 MPa for 10 seconds to obtain a sheet-shaped preform.

After applying a fluorine-based release agent to a mold with outer dimensions of 270x270 mm in which a groove shape with a width of 1 mm and a depth of 0.6 mm was formed within the range of 200x200 mm, the preform was inserted into the mold and thermocompression-molded at a pressure of 40 MPa and a temperature of 180°C.

A separator material (200×200 mm, minimum thickness: 0.45 mm) was thus produced which was formed of a graphite and cured resin molded product in which the graphite powder was bound with the cured resin and in which grooves with a width of 1 mm and a depth of 0.6 mm were formed as gas passages. A test piece was prepared using the separator material. The material properties were measured according to the following methods. The measurement results are shown in Table 2.
(1) Flexural strength (MPa): The flexural strength was measured at room temperature in accordance with JIS R1601.
(2) Fracture strain (%): The fracture strain was measured at room temperature in accordance with JIS R1601.
(3) Specific resistance (mΩ·cm): The specific resistance was measured in accordance with JIS C2525.
(4) Contact resistance (mΩ·cm²): The contact resistance was measured at 1 A while causing the test pieces to come into contact at a pressure of 1 MPa.
(5) Gas permeation coefficient (mol·m·m⁻²·sec⁻¹·MPa⁻¹): The amount of gas permeated per unit time and unit cross-sectional area when applying a differential pressure of 0.2 MPa using nitrogen gas was measured.

**TABLE 2**

| | Example | | | Comparative Example | | | |
|---|---|---|---|---|---|---|---|
| | 1 | 2 | 4 | 1 | 2 | 3 | 4 |
| Flexural strength (MPa) | 32 | 50 | 41 | 54 | 47 | 58 | 60 |
| Fracture strain (%) | 2.2 | 1.0 | 1.1 | 0.65 | 0.61 | 0.52 | 0.52 |
| Specific resistance (mΩ·cm) | 8.8 | 12 | 7.5 | 9.2 | 10 | 10 | 8.5 |
| Contact resistance (mΩ·cm²) | 9.5 | 8.9 | 9.2 | 10 | 7.1 | 9.6 | 7.6 |
| Gas permeation coefficient (×10⁻¹²mol.m.m⁻².sec⁻¹.MPa⁻¹) | 2.3 | 1.7 | 1.9 | 2.2 | 2.1 | 1.8 | 1.9 |

As shown in Table 2, the test pieces of Example 1, 2 and 4 according to the present invention exhibited a flexural strength, specific resistance, contact resistance, and gas permeation coefficient necessary for a fuel cell separator material, and showed an excellent fracture strain.

### INDUSTRIAL APPLICABILITY

According to the present invention, a fuel cell separator material which exhibits suitable properties (i.e., high fracture strain, excellent strength, good conductivity, and good gas impermeability), and a method of producing the same can be provided.

## Claims

1. A fuel cell separator material comprising a carbon/cured resin molded product in which a carbon powder is bound with a binder which comprises a mixed resin of a bifunctional aliphatic alcohol ether-type epoxy resin and a polyfunctional phenol-type epoxy resin, a phenol resin curing agent, and a curing accelerator as essential components.

2. The fuel cell separator material according to claim 1, wherein the mixed resin contains the bifunctional aliphatic alcohol ether-type epoxy resin in an amount of 40 wt% or more.

3. A method of producing a fuel cell separator material comprising preparing a resin solution by dissolving a bifunctional aliphatic alcohol ether-type epoxy resin, a polyfunctional phenol-type epoxy resin, a phenol resin curing agent, and a curing accelerator in an organic solvent, mixing a carbon powder with the resin solution, removing the organic solvent by volatilization, grinding the mixture to obtain a molding powder, filling a preforming mold with the molding powder, providing an upper mold, preforming the molding powder at a pressure of 1 to 10 MPa to obtain a preform, inserting the preform into a mold, and thermocompression-molding the preform at a pressure of 20 to 50 MPa and a temperature of 150 to 250°C.

## Patentansprüche

1. Brennstoffzellen-Separatormaterial, umfassend ein Kohlenstoff/Harzformstoff-Formteil, in welchem ein Kohlepulver mit einem Bindemittel gebunden ist, das als wesentliche Bestandteile ein Mischharz aus einem bifunktionellen Epoxidharz vom Typ aliphatischer-Alkohol-Ether und einem polyfunktionellen Epoxidharz vom Phenol-Typ, ein Phenolharz-Härtemittel und einen Härtungsbeschleuniger umfasst.

2. Brennstoffzellen-Separatormaterial nach Anspruch 1, bei welchem das Mischharz ein bifunktionelles Epoxidharz vom Typ aliphatischer-Alkohol-Ether in einer Menge von 40 Gew.-% oder mehr enthält.

3. Verfahren zur Herstellung eines Brennstoffzellen-Separatormaterials, umfassend das Herstellen einer Harzlösung durch Lösen eines bifunktionellen Epoxidharzes vom Typ aliphatischer-Alkohol-Ether und eines polyfunktionellen Epoxidharzes vom Phenol-Typ, eines Phenolharz-Härtemittels und eines Härtungsbeschleunigers in einem organischen Lösungsmittel, Mischen eines Kohlepulvers mit der Harzlösung, Entfernen des organischen Lösungsmittels durch Verflüchtigung, Mahlen der Mischung, so dass eine pulverige Formmasse erhalten wird, Füllen einer Vorformungsform mit der pulverigen Formmasse, Bereitstellen einer oberen Form, Vorformen der pulverigen Formmasse unter einem Druck von 1 bis 10 MPa, sodass ein Vorformling erhalten wird, Einsetzen des Vorformlings in eine Form, und Thermokompressionsformen des Vorformlings unter einem Druck von 20 bis 50 MPa und einer Temperatur von 150 bis 250 °C.

## Revendications

1. Matériau de séparation pour pile à combustible comprenant un produit moulé à base de carbone/résine durcie, dans lequel une poudre de carbone est liée avec un liant qui comprend une résine mixte d'une résine époxy bifonctionnelle du type d'un alcool éther aliphatique et d'une résine époxy polyfonctionnelle du type d'un phénol, un agent de durcissement de la résine phénolique et un accélérateur du durcissement, à titre de composants essentiels.

2. Matériau de séparation pour pile à combustible selon la revendication 1, dans lequel la résine mixte contient la résine époxy bifonctionnelle du type d'un alcool éther aliphatique en une quantité de 40 % en poids ou plus.

3. Procédé de production d'un matériau de séparation pour pile à combustible comprenant la préparation d'une solution de résine par dissolution d'une résine époxy bifonctionnelle du type d'un alcool éther aliphatique, d'une résine époxy polyfonctionnelle du type d'un phénol, d'un agent de durcissement de la résine phénolique et d'un accélérateur du durcissement dans un solvant organique, le mélange d'une poudre de carbone avec la solution de résine, d'élimination du solvant organique par volatilisation, le broyage du mélange pour obtenir une poudre de moulage, le remplissage d'un moule de préformage avec la poudre de moulage, la procuration d'un moule supérieur, le préformage de la poudre de moulage sous une pression de 1 à 10 MPa pour obtenir une préforme, l'insertion de la préforme dans un moule et le moulage par thermocompression de la préforme à une pression de 20 à 50 MPa et à une température de 150 à 250 °C.
